# EUROPEAN PATENT SPECIFICATION

(11) **EP 4 464 543 B1**
(45) Date of publication and mention of the grant of the patent: **01.10.2025**
(21) Application number: 23173712.3
(22) Date of filing: 16.05.2023
(51) Int. Cl.: B60L 53/302

(54) **FLUID CHANNEL ASSEMBLY FOR A CONNECTOR OF A CHARGING GUN, CONNECTOR, CHARGING GUN, CHARGING STATION AND METHOD OF COOLING A CONTACT PIN OF A CONNECTOR OF A CHARGING GUN**
FLUIDKANALANORDNUNG FÜR EINEN STECKER EINER LADEPISTOLE, STECKER, LADEPISTOLE, LADESTATION UND VERFAHREN ZUM KÜHLEN EINES KONTAKTSTIFTS EINES STECKERS EINER LADEPISTOLE
ENSEMBLE CANAL DE FLUIDE POUR UN CONNECTEUR D'UN PISTOLET DE CHARGE, CONNECTEUR, PISTOLET DE CHARGE, STATION DE CHARGE ET PROCÉDÉ DE REFROIDISSEMENT D'UNE BROCHE DE CONTACT D'UN CONNECTEUR D'UN PISTOLET DE CHARGE

(43) Date of publication of application: 20.11.2024
(73) Proprietor: ABB E-mobility B.V., 2629 JG Delft (NL)
(72) Inventor: SIMONETTI, Marco, 5443 Niederrohrdorf (CH); GAUTSCHI, Simon, 8006 Zuerich (CH); GARCIA-FERRE, Francisco, 5400 Baden (CH)
(74) Representative: Zimmermann & Partner Patentanwälte mbB

(56) References cited:
- EP-A1- 4 112 366
- DE-A1- 102020 208 550
- DE-B4- 102016 206 300
- US-A1- 2022 200 196
- US-B2- 11 072 251

## Description

### TECHNICAL FIELD

Embodiments of the present disclosure relate to a fluid channel assemblies of a charging gun for an electric vehicle. Further embodiments of the present disclosure relate to a charging gun, a connector for an electric vehicle charging station, a charging station and a method of cooling a contact pin of a connector of a charging gun.

### BACKGROUND

Electric and hybrid-electric vehicles are an alternative mode of transport to petrol and diesel engine vehicles. These vehicles use an electric motor as a main or an auxiliary driving mechanism, and incorporate a rechargeable battery to power the electric motor. Recent advancements in electric vehicle (EV) technology have led to electric vehicles with increased range and speed, which has contributed to an increase in the popularity of electric vehicle ownership. As an increased number of vehicle manufacturers begin to produce electric vehicles, electric vehicle ownership appears set to become commonplace.

Electric vehicles are generally recharged by connecting the electric vehicle to a specialized charging apparatus (which may be referred to as a charging station or a charging point), which includes a charging connector which couples with a charging port on the vehicle and delivers power to recharge the vehicle's battery. The charging stations generally draw electricity from the main power grid, and are therefore provided in locations electrically connected to the main power grid. For example, electric vehicle charging stations may be provided at service stations, shopping or leisure venues, or may be provided at the user's home. Electric vehicle recharging is currently much slower than refilling a petrol or diesel vehicle with fuel, and may require a user to recharge their electric vehicle for a long time, for example overnight.

The advancement of electric vehicles has created an increased need for charging equipment that delivers electric power. In particular, the EV market demands for continuously higher power and current supplies, which poses particular attention to the design of cable and connector systems. Even if the electrical resistance of typical cable and connector systems is of the order of magnitude of mOhm, heating due to Joule effect is not negligible and particular attention must be paid to the thermal design of this system. For instance, for a 3 m cable with 105 mm² of copper cross section per pole with a current of 3000A more than 9kW of heat are generated inside the cable and connector system such that active cooling becomes necessary.

With respect to the state of the art, reference is made to documents DE 10 2020 208550 A1, US 11 072 251 B2, EP 4 112 366 A1, and DE 10 2016 206300 B4.

Document DE 10 2020 208550 A1 relates to a method for controlling a volume flow of a coolant through an external coolant circuit which is formed between a charging station and an electrically driven vehicle, wherein the external coolant circuit is closed via a plug of the charging station with a vehicle-side coupling, and wherein the coolant is pumped along the external coolant circuit by a pump.

Document US 11 072 251 B2 relates to methods and systems for preparing an energy receiving apparatus of a vehicle for receiving an increase in a level of energy storage prior to a vehicle reaching an energy replenishment station for receiving the increase. In one example, a method comprises preparing an energy receiving apparatus for receiving an increase in a level of energy storage while the vehicle is traveling to the energy replenishment station, in response to a vehicle operator confirming at the controller an intent to stop at the energy replenishment station to increase the level of energy storage at the energy receiving apparatus. In this way, a time-frame for increasing the energy level increase may be reduced as compared to situations where such preparations are not undertaken.

Document EP 4 112 366 A relates to an electric vehicle charging connector comprising contact elements. The contact elements are electrically connected to a cable. The contact elements comprise a block portion and at least one contact finger extending from the block portion. The electric charging connector further comprises a cooling tube for forced cooling, comprising a liquid coolant for cooling at least the contact element. The cooling tube is fluidically connected to an internal cooling channel of the contact element. The cooling channel extends from the block portion (34) into the contact finger, so that both parts are cooled by the cooling fluid.

Document DE 10 2016 206300 B4 relates to a charging plug for coupling with a corresponding connecting device and for transmitting electrical energy. Furthermore, the present invention relates to a charging station for supplying electrical energy to a receiver of electrical energy.

Accordingly, there is a demand for improved cooling strategies for EV charging equipment which at least partially overcome some of the problems of the state of the art.

### SUMMARY

In light of the above, a system for a connector of a charging gun for an electric vehicle according to claim 1, a connector for an electric vehicle charging station according to claim 8, a charging gun for an electric vehicle charging station according to claim 9, a charging station according to claim 10 and a method of cooling a contact pin of a connector for an electric vehicle charging station according to claim 11 are provided. Further aspects, advantages, and features are apparent from the dependent claims, the description, and the accompanying drawings.

The system for a connector of a charging gun for an electric vehicle according to embodiments of the present disclosure is improved compared to the state of the art, particularly with respect to the hydraulic performance. Further, compared to the state of the art, embodiments of the present disclosure provide for the possibility to employ a lower coolant pressure such that problems associated with coolant leakages due to high coolant pressure can be avoided, and the overall reliability is improved.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 shows a schematic diagram of a fluid channel assembly according to embodiments described herein;
Fig. 2 shows a schematic diagram of the fluid flow in the fluid channel assembly according to embodiments described herein;
Figs. 3A and 3B show a schematic a sectional views of a connector according to embodiments described herein;
Fig. 4 shows a schematic exploded perspective view of a connector according to embodiments described herein;
Figs. 5A-5C shows different views of an assembly of a contact terminal and a contact pin of a connector according to embodiments described herein;
Fig. 6 shows a schematic cross-sectional view of a diagram of a charging cable according to embodiments described herein;
Fig. 7 shows a diagram of a charging station according to embodiments described herein; and
Fig. 8 shows a block diagram for illustrating a method of cooling a contact pin according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

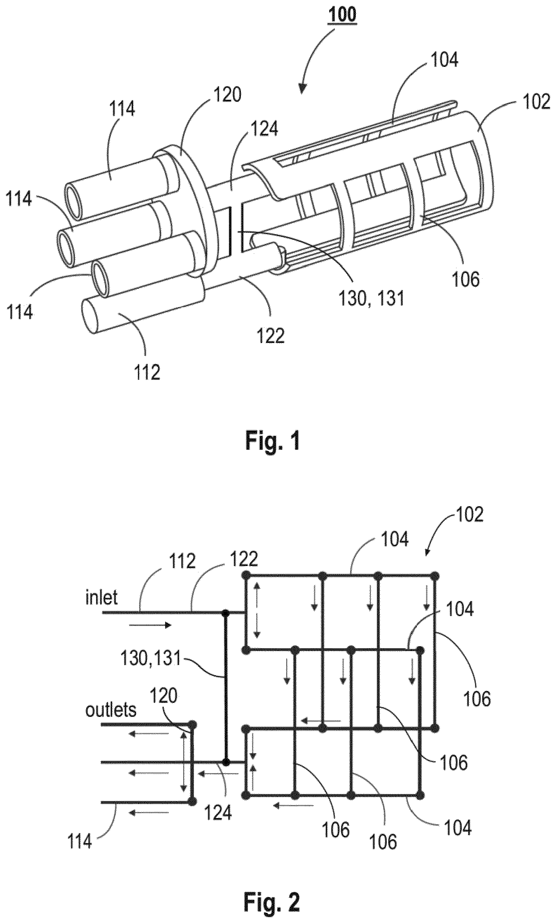

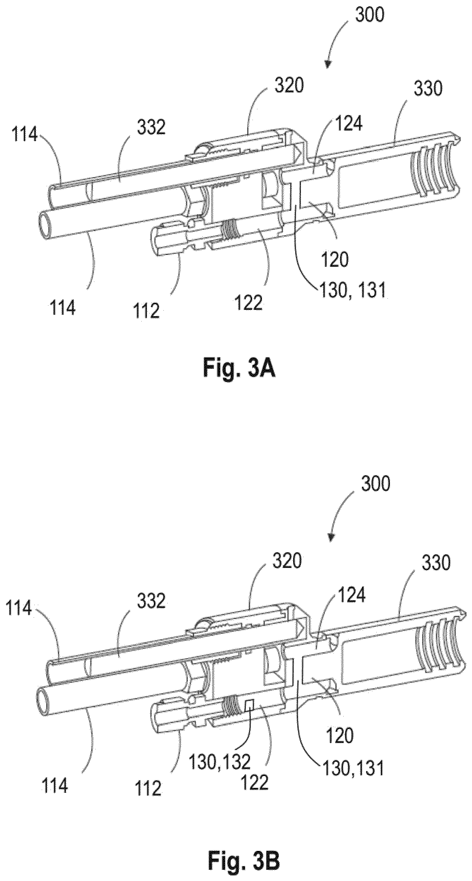

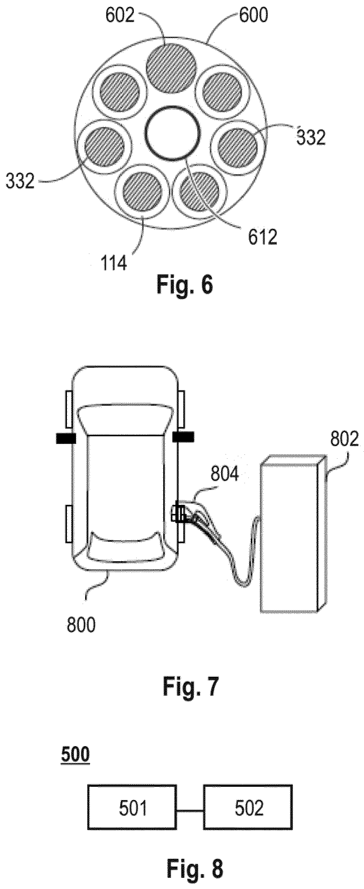

Fig. 1 shows a schematic diagram of a fluid channel assembly 100 of a system according to embodiments described herein. In particular, Fig. 1 shows the fluid channel assembly 100 of the system for a connector for one polarity. More specifically, the fluid channel assembly 100 of the system is for a connector 300 (exemplarily shown in Figs. 3A and 3B) of a charging gun 804 (exemplarily shown in Fig. 7) for an electric vehicle 800 (exemplarily shown in Fig. 7).

According to embodiments, which can be combined with other embodiments described herein, the fluid channel assembly 100 of the system includes a fluid channel network 102 for cooling a contact pin 330 of the charging gun 804. The fluid channel network 102 is arranged around the contact pin 330 and is in direct or indirect contact with the contact pin 330. Additionally, the fluid channel assembly 100 of the system includes a fluid inlet 112 connected to the fluid channel network 102 via a first single fluid transfer channel 122, as exemplarily shown in Fig. 1. The fluid inlet 112 is configured to receive a coolant through a charging cable and to inject the coolant into the fluid channel network 102. Further, the fluid channel assembly 100 of the system includes a fluid outlet 114 connected to the fluid channel network 102 via a second single fluid transfer channel 124, as exemplarily shown in Fig. 1. The fluid outlet 114 is configured to receive the coolant from the fluid channel network 102 and to inject the coolant into the charging cable. Moreover, the fluid channel assembly 100 of the system includes a flow balancing device 130 for tuning a flow rate of the coolant from the first single fluid transfer channel 122 into the second single fluid transfer channel 124. Examples for the flow balancing device 130 are schematically indicated in Figs. 1, 2, 3A and 3B. According to the invention, the flow balancing device 130 is a bypass 131. The bypass is integrated in the contact pin 330. The bypass 131 is configured to directly connect the first single fluid transfer channel 122 and the second single fluid transfer channer 124 for tuning a flow rate of the coolant into the fluid channel network 102. The contact pin 330 is exchangeable.

According to embodiments, which can be combined with other embodiments described herein, the outlet 114 includes a number of channels representing inflow ports in accordance with the number of DC conductors for the connector for one polarity. For example, the outlet 114 may consist of three channels representing inflow ports in accordance with three DC conductors for the connector for one polarity. Typically, the inlet 112 and outlet 114 are oriented towards the charging station. When the charging gun is plugged into the socket of a vehicle, the channel network 102 is oriented towards the vehicle.

Fig. 2 shows an exemplary schematic diagram of the fluid flow in the fluid channel assembly 100 of the system according to embodiments described herein. In particular, Fig. 2 shows a synoptic scheme of the hydraulic circuit which can be provided by the fluid channel assembly 100 of the system inside the connector.

The arrows show the directions of the flow. The fluid from the charging station flows through the inlet 112 and the first single fluid transfer channel 122 into two main channels 104 of the fluid channel network 102 on the inflow side. From there, the fluid flows via crosslink channels 106 to main channels 104 on the outflow side. Thereafter, the fluid paths combine and the fluid flows via the second single fluid transfer channel 124 and a fluid path in a connection piece 120 to the outlets 114 and back to the charging station. Typically, the connection piece 120 is configured to split the flow into three outflows. It is to be understood that the number of each type of paths and the rectangular directions as indicated in Fig. 2 is just an example and may vary.

According to embodiments, which can be combined with other embodiments described herein, the flow balancing device 130 is a variable passive flow balancing device. The variable passive flow balancing device is configured such that the flow rate of the coolant into the fluid channel network is tuned according to a preselected, constant-discrete value.

The flow balancing device 130 is provided by a bypass 131 connecting the first single fluid transfer channel 122 and the second single fluid transfer channel 124, as exemplarily shown in Fig. 3A. Accordingly, a total coolant flow rate Q_{T} coming from the fluid inlet 112 is divided into a first flow rate Q₁ going through the fluid channel network 102 and a second flow rate Q₂ = Q_{T}- Q₁ going through the bypass 131. In that manner even if Q_{T} reaches high values due to thermal needs of the cable, by selecting an appropriate dimension of the bypass cross section only Q₁ flows inside the fluid channel network 102 such that the coolant pressure in the fluid channel network 102 is reduced as compared to a configuration without the bypass.

The bypass 131 is integrated in the contact pin 330, as exemplarily shown in Fig. 3A. In particular, the bypass 131 may be integrated in the tulip of the contact pin 330. The term "tulip" of a contact terminal usually refers to the shape of the sleeve at the end of the terminal that provides a secure connection between the terminal and the conductor or wire. The tulip shape allows the wire to be inserted easily while providing a secure and reliable connection.

Typically, the contact pin 330 is exchangeable. Accordingly, for adjusting a flowrate through the bypass and thus a flowrate through the fluid channel network 102, different contact pins with integrated bypasses of different designs may be used. In other words, for tuning a flow rate of the coolant from the first single fluid transfer channel 122 into the fluid channel network 102, a contact pin with an integrated bypass designed to provide the desired flow rate can be used. Accordingly, the modification of the flow balancing can be made by replacing the existing contact pin particularly the existing tulip, with a second contact pin, particularly with a second tulip, having a different by pass diameter.

According to embodiments, which can be combined with other embodiments described herein, the flow balancing device 130 further includes a replaceable flow restrictor 132 provided in the first single fluid transfer channel 122, as schematically indicated in Fig. 3B. Accordingly, the modification of the flow balancing can be made by replacing the flow restrictor. A flow restrictor can be understood as a device used to limit the flow rate of a fluid, particularly a coolant as described herein. Typically, the flow restrictor is a small component that is inserted into a pipe or conduit, particularly the first single fluid transfer channel 122 as described herein, to create a constriction, which reduces the flow rate of the fluid passing through it.

According to embodiments, which can be combined with other embodiments described herein, the flow balancing device 130 is an adjustable flow restrictor 133 extending into the first single fluid transfer channel 122. An adjustable flow restrictor can be understood as a device that allows for the flow rate of a fluid to be regulated and adjusted to a desired level. It is similar to a standard flow restrictor in that it creates a constriction in a pipe or conduit to reduce the flow rate of the fluid passing through it. However, an adjustable flow restrictor allows for the size of the constriction to be changed, either manually or automatically, to increase or decrease the flow rate as needed. This type of flow restrictor can be used in applications where the flow rate may need to be adjusted to compensate for changes in operating conditions, such as changes in temperature or pressure, or to optimize the performance. For example, the adjustable flow restrictor 133 can be a screw extending into the first single fluid transfer channel 122. Accordingly, the modification of the flow balancing can be made by adapting the screw position in the axial direction of the screw.

According to embodiments, which can be combined with other embodiments described herein, the flow balancing device 130 further includes a variable active flow balancing device. Unlike passive flow balancing devices, which rely on fixed valves or dampers to regulate flow, variable active flow balancing devices may use electronically controlled valves or dampers that can be adjusted in real-time to maintain a precise flow rate. This allows for greater precision in flow control and more efficient operation. Additionally, a variable active flow balancing device can be equipped with sensors and software that can monitor and adjust flow automatically, based on real-time data such as temperature and pressure.

Typically, the variable active flow balancing device is configured such that the flow rate of the coolant into the fluid channel network 102 is tunable in a variable manner. In particular, the flow balancing device 130 can be a variable flow rate adjustor provided in the first single fluid transfer channel 122. Typically, the variable flow rate adjustor includes an actuator to adjust the flow rate of the coolant into the fluid channel network 102. Accordingly, the variable active flow balancing device is typically configured to dynamically adjust the flow of fluid in response to changes in the system, such as variations in temperature and/or pressure. For example, the actuator configured for adjusting the flow rate can be a pneumatic, a hydraulic, an electric or a thermal actuator.

In the present disclosure, a thermal actuator can be understood as an actuator configured to adjust the flow rate automatically as a function of a temperature of the coolant. A thermal actuator may also be referred to as thermal wax element, wax element, or thermostatic element. It is to be understood that a thermal actuator can convert heat energy into mechanical energy and has the function of automatically transmitting mechanical action after induction of temperature changes. Its mechanical action is derived from thermal expansion material. Typically, the thermal actuator is not affected by the surrounding environment. A thermal actuator beneficially provides for a wide temperature adjustment range, accurate temperature control, simple structure, and reliable performance.

According to a further aspect of the present disclosure, a connector 300 for an electric vehicle charging station is provided. Exemplary schematic views of the connector 300 according to embodiments described herein are shown in Figs. 3A, 3B, 4 and 5.

In particular, Figs. 3A and 3B show exemplary cross-sectional views of a DC connector 300 for one polarity. The charging gun comprises two such DC connectors 300, one for DC+ and one for DC-. The cross section shows a DC conductor 332, that is, a DC+ or DC- conductor. The DC conductors 332 are attached to the contact terminal 320 and surrounded by tubes 114, which are the outlets of the fluid channel assembly of the system. The inlet 112 is continued by the first single fluid transfer channel 122 for transferring the fluid through the contact terminal 320 to the fluid channel network inside the contact pin 330. Similarly, the second single fluid transfer channel 124 transfers the fluid through the contact terminal 320 from the fluid channel network to the outlet 114, whereby the fluid is distributed in the connection piece 120 inside the contact terminal 320 to three outlet channels (in Figs. 3A and 3B two outlet channels are shown). Typically, the contact pin 330 contains contact springs, which guarantee electrical contact with the car inlet (not shown in Figs. 3A and 3B). The contact springs can be placed in the interior side of the contact pin 330, particularly interior grooves. Three of such grooves are visible ins Figs. 3A and 3B).

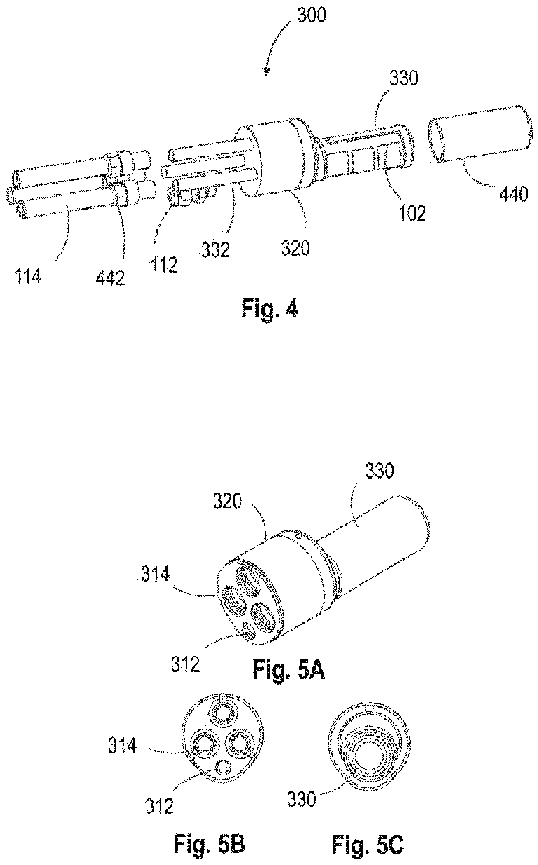

Fig. 4 shows an exemplary DC connector 300 for one polarity in an exploded view. Three copper conductors 332 are shown and their respective outlet tubes 114. The conductors 332 are attached to the contact terminal 320. The outlet tubes 114 have fixation nuts 442 for fixing them to the copper conductors 332 and the contact terminal 320. The fluid channel network 102 is formed by structures, for example grooves, which are milled into the contact pin and which are covered by sleeve 440. Typically, the sleeve 440 is made of copper.

Figs. 5A to 5C show different views of an exemplary assembly of a contact terminal 320 and a contact pin. Particularly, Fig. 5A shows an oblique view, Fig. 5B shows a front view, and Fig. 5C shows a rear view. In the front and the oblique view, the opening 312 for the inlet 112 and the openings 314 for the outlet tubes 114 and the DC conductors 332 are visible.

According to embodiments, which can be combined with other embodiments described herein, the connector 300 includes a fluid channel assembly 100 of the system according to any embodiments described herein,
a contact pin 330, and a contact terminal 320. The contact terminal 320 includes the fluid outlet 114 for connecting outflow tubes, the fluid inlet 112 for connecting an inflow tube. Further, the contact terminal 320 includes means for connecting at least one copper conductor on a first side and means for connecting the contact pin 330 on a second side. The contact terminal is configured to accommodate at least a portion of the first single fluid transfer channel 122 and at least a portion of the second single fluid transfer channel 124. The fluid channel network 102 is arranged around the contact pin 330. It is to be understood that the fluid in the channel network 102 is in direct or indirect contact with the contact pin 330.

Fig. 6 shows a diagram of a charging cable with six DC conductors 332, three for DC+ and three for DC- as well as one PE conductor 602, i.e. a copper wire for the ground. The six DC conductors 332 are jacketed by the outflow tubes 114 so that the cooling fluid cools the cables 332 at the return flow. In the center, the inflow tube 612 for the fluid is arranged, which is surrounded by the seven conductors 332, 602. It is to be understood that the charging cable 600 shown in Fig. 6 is just an example and may have a different design than that shown in Fig. 6. The wires may have a cross section of 35 mm² for a total of 105 mm² per pole. The design of the inlet and outlet ports may be varied in number and shape can be designed in function of the specific cable design. The coolant channels inside the connector, in particular in the fluid channel network, can be adapted in shape, number, and dimensions in function of the required thermal performances. Coolant channels inside the connector can be designed with different cross-section and dimensions in function of manufacturing process constraints.

According to another aspect of the present disclosure, a charging gun 804 for an electric vehicle charging station 802 is provided, as schematically shown in Fig. 7. The charging gun 804 includes a first connector according to embodiments described herein and a second connector according embodiments described herein. Accordingly, it is to be understood that the first connector and the second connector can be configured according to embodiments of the connector 300 as exemplary described with reference to Figs. 1 to 5. Typically, the first connector is a DC+ connector for providing a positive DC pole, and the second connector 300 is a DC- connector for providing a negative DC pole. Additionally, the charging gun 804 includes a charging cable with a least one DC+ conductor connected to the DC+ connector, at least one DC- conductor connected to the DC- connector, at least one first outflow tube, at least a second outflow tube, and an inflow tube. The at least one DC+ conductor is configured to receive the at least one first outflow tube. The at least one first outflow tube is connected to the outlet 114 of the DC+ contact terminal. The at least one DC- conductor is configured to receive the at least one second outflow tube. The at least one second outflow tube is connected to the outlet 114 of the DC- contact terminal.

According to a further aspect of the present disclosure, a charging station 802 comprising a charging gun 804 according to any embodiments described herein is provided. Fig. 7 shows a diagram of an electric vehicle 800, which is connected to a charging gun 804 of a charging station 802.

According to a yet further aspect of the present disclosure, a method 500 of cooling a contact pin 330 of a connector 300 of a charging gun for an electric vehicle is provided. Fig. 8 shows a block diagram for illustrating a method 500 of cooling a contact pin according to embodiments described herein. According to embodiments, which can be combined with other embodiments described herein, the method includes providing (represented by block 501 in Fig. 8) a coolant flow in a fluid channel network 102 of a fluid channel assembly 100 of the connector 300. The fluid channel network 102 is arranged around the contact pin 330 and is in direct or indirect contact with the contact pin 330. A fluid inlet 112 is connected to the fluid channel network 102 via a first single fluid transfer channel 122. The fluid inlet 112 is configured to receive the coolant through a charging cable and to inject the coolant into the fluid channel network 102. A fluid outlet 114 is connected to the fluid channel network 102 via a second single fluid transfer channel 124, The fluid outlet 114 is configured to receive the coolant from the fluid channel network 102 and to inject the coolant into the charging cable. Further, the method includes tuning (represented by block 502 in Fig. 8) a flow rate of the coolant from a first single fluid transfer channel 122 into a second single fluid transfer channel 124 by employing a bypass 131 integrated in the contact pin 330. The bypass 131 is configured to directly connect the first single fluid transfer channel 122 and the second single fluid transfer channer 124 for tuning a flow rate of the coolant into the fluid channel network 102. In particular, the fluid channel assembly 100 can be a fluid channel assembly 100 of a system according to any embodiments described herein. Further, the connector 300 can be a connector 300 according to any embodiments described herein.

In view of the embodiments described herein, it is to be understood that compared to the state of the art an improved fluid channel assembly for a connector of a charging gun for an electric vehicle, an improved connector for an electric vehicle charging station, an improved charging gun for an electric vehicle charging station, an improved charging station and an improved method of cooling a contact pin of a connector for an electric vehicle charging station are provided. In particular, embodiments of the present disclosure beneficially provide for improved hydraulic performance and the possibility to employ lower coolant pressures, such that problems associated with coolant leakages due to high coolant pressure can be avoided, and the overall reliability is improved.

While the foregoing is directed to embodiments, other and further embodiments may be devised without departing from the basic scope, and the scope is determined by the claims that follow.

### REFERENCE NUMBERS

- 100: fluid channel assembly
- 102: fluid channel network
- 104: main channels
- 106: cross-link channels
- 112: fluid inlet
- 114: fluid outlet
- 120: connection piece
- 122: first single fluid transfer channel
- 124: second single fluid transfer channel
- 130: flow balancing device
- 131: bypass
- 132: replaceable flow restrictor
- 133: adjustable flow restrictor
- 134: variable flow rate adjustor
- 300: connector
- 312: opening for inlet
- 314: opening for conductor and outlet
- 320: contact terminal
- 330: contact pin
- 332: DC conductor (e.g. DC+ or DC-)
- 440: Sleeve
- 442: fixation nuts
- 500: method of cooling a contact pin
- 501, 502: blocks of block diagram for illustrating the method of cooling a contact pin
- 600: charging cable
- 602: PE conductor; neutral line
- 612: inflow tube
- 800: electric vehicle
- 802: charging station
- 804: charging gun

## Claims

1. System for a connector (300) of a charging gun (804) for an electric vehicle (800), comprising:
a contact pin (330) of the charging gun (804) and a fluid channel assembly (100), comprising:
- a fluid channel network (102) for cooling the contact pin (330) of the charging gun (804), wherein the fluid channel network (102) is arranged around the contact pin (330) and is in direct or indirect contact with the contact pin (330);
- a fluid inlet (112) connected to the fluid channel network (102) via a first single fluid transfer channel (122), the fluid inlet (112) being configured to receive a coolant through a charging cable and to inject the coolant into the fluid channel network (102);
- a fluid outlet (114) connected to the fluid channel network (102) via a second single fluid transfer channel (124), the fluid outlet (114) being configured to receive the coolant from the fluid channel network (102) and to inject the coolant into the charging cable;
**characterized in that**:
a bypass (131) is integrated in the contact pin (330), wherein the bypass (131) is configured to directly connect the first single fluid transfer channel (122) and the second single fluid transfer channer (124) for tuning a flow rate of the coolant into the fluid channel network (102), and wherein the contact pin (330) is exchangeable.

2. The system according to claim 1, further comprising a replaceable flow restrictor provided in the first single fluid transfer channel (122).

3. The system according to claim 1 or 2, further comprising an adjustable flow restrictor, particularly a screw, extending into the first single fluid transfer channel (122).

4. The system according to any of claims 1 to 3, further comprising a variable active flow balancing device configured such that the flow rate of the coolant into the fluid channel network (102) is tunable in a variable manner.

5. The system according to claim 4, wherein the variable active flow balancing device (130) is a variable flow rate adjustor provided in the first single fluid transfer channel (122).

6. The system according to claim 4 or 5, wherein the variable flow rate adjustor comprises a pneumatic, a hydraulic or an electric actuator to adjust the flow rate of the coolant into the fluid channel network (102).

7. The system according to claim 4 or 5, wherein the variable flow rate adjustor comprises a thermal actuator configured to adjust the flow rate automatically as a function of a temperature of the coolant.

8. Connector (300) for an electric vehicle charging station, comprising:
a system according to any of claims 1 to 7 and a contact terminal (320) comprising the fluid outlet (114) for connecting outflow tubes, the fluid inlet (112) for connecting an inflow tube, and means for connecting at least one copper conductor on a first side and means for connecting the contact pin (330) on a second side;
wherein the contact terminal is configured to accommodate at least a portion of the first single fluid transfer channel (122) and at least a portion of the second single fluid transfer channel (124); and
wherein the fluid channel network (102) is arranged around the contact pin (330) and the fluid in the channel network (102) is in direct or indirect contact with the contact pin (330).

9. Charging gun (804) for an electric vehicle charging station, comprising:
a first connector (300) according to claim 8 and a second connector (300) according to claim 8, wherein the first connector (300) is a DC+ connector for providing a positive DC pole, and the second connector (300) is a DC- connector for providing a negative DC pole; and
a charging cable with a least one DC+ conductor connected to the DC+ connector, at least one DC- conductor connected to the DC- connector (300), at least one first outflow tube, at least a second outflow tube, and an inflow tube, wherein the at least one DC+ conductor is configured to receive the at least one first outflow tube, wherein the at least one first outflow tube is connected to the outlet (114) of the DC+ contact terminal, wherein the at least one DC- conductor is configured to receive the at least one second outflow tube, and wherein the at least one second outflow tube is connected to the outlet (114) of the DC- contact terminal.

10. Charging station (802) comprising a charging gun (804) according to claim 9.

11. Method (500) of cooling a contact pin (330) of a connector (300) of a charging gun for an electric vehicle, comprising
providing (501) a coolant flow in a fluid channel network (102) of a fluid channel assembly (100) of the connector (300), the fluid channel network (102) being arranged around the contact pin (330) and is in direct or indirect contact with the contact pin (330), wherein a fluid inlet (112) is connected to the fluid channel network (102) via a first single fluid transfer channel (122), the fluid inlet (112) being configured to receive the coolant through a charging cable and to inject the coolant into the fluid channel network (102), and wherein a fluid outlet (114) is connected to the fluid channel network (102) via a second single fluid transfer channel (124), the fluid outlet (114) being configured to receive the coolant from the fluid channel network (102) and to inject the coolant into the charging cable; and
tuning (502) a flow rate of the coolant from a first single fluid transfer channel (122) into the fluid channel network (102) by employing a bypass (131) integrated in the contact pin (330), wherein the bypass (131) is configured to directly connect the first single fluid transfer channel (122) and the second single fluid transfer channer (124) for tuning a flow rate of the coolant into the fluid channel network (102) .

12. The method of claim 11, wherein the connector (300) is a connector (300) according to claim 8.

## Patentansprüche

1. System für einen Stecker (300) einer Ladepistole (804) für ein Elektrofahrzeug (800), das Folgendes aufweist:
einen Kontaktstift (330) der Ladepistole (804) und eine Fluidkanalanordnung (100), die Folgendes aufweist:
- ein Fluidkanalnetzwerk (102) zum Kühlen des Kontaktstifts (330) der Ladepistole (804), wobei das Fluidkanalnetzwerk (102) um den Kontaktstift (330) herum angeordnet ist und in direktem oder indirektem Kontakt mit dem Kontaktstift (330) steht;
- einen Fluideinlass (112), der über einen ersten einzelnen Fluidübertragungskanal (122) mit dem Fluidkanalnetzwerk (102) verbunden ist, wobei der Fluideinlass (112) so konfiguriert ist, dass er ein Kühlmittel über ein Ladekabel aufnimmt und das Kühlmittel in das Fluidkanalnetzwerk (102) einspritzt;
- ein Fluidauslass (114), der über einen zweiten einzelnen Fluidübertragungskanal (124) mit dem Fluidkanalnetzwerk (102) verbunden ist, wobei der Fluidauslass (114) so konfiguriert ist, dass er das Kühlmittel aus dem Fluidkanalnetzwerk (102) aufnimmt und das Kühlmittel in das Ladekabel einspritzt;
**dadurch gekennzeichnet, dass**:
ein Bypass (131) in den Kontaktstift (330) integriert ist, wobei der Bypass (131) so konfiguriert ist, dass er den ersten einzelnen Fluidübertragungskanal (122) und den zweiten einzelnen Fluidübertragungskanal (124) direkt verbindet, um eine Durchflussrate des Kühlmittels in das Fluidkanalnetzwerk (102) einzustellen, und wobei der Kontaktstift (330) austauschbar ist.

2. System nach Anspruch 1, das darüber hinaus einen austauschbaren Durchflussbegrenzer aufweist, der in dem ersten einzelnen Fluidübertragungskanal (122) vorgesehen ist.

3. System nach Anspruch 1 oder 2, das darüber hinaus einen einstellbaren Durchflussbegrenzer, insbesondere eine Schraube, aufweist, der sich in den ersten einzelnen Fluidübertragungskanal (122) erstreckt.

4. System nach einem der Ansprüche 1 bis 3, das darüber hinaus eine variable aktive Durchflussausgleichsvorrichtung aufweist, die so konfiguriert ist, dass die Durchflussrate des Kühlmittels in das Fluidkanalnetzwerk (102) auf variable Weise einstellbar ist.

5. System nach Anspruch 4, wobei die variable aktive Durchflussausgleichsvorrichtung (130) ein variabler Durchflussratenregler ist, der in dem ersten einzelnen Fluidübertragungskanal (122) vorgesehen ist.

6. System nach Anspruch 4 oder 5, wobei der variable Durchflussratenregler einen pneumatischen, hydraulischen oder elektrischen Aktuator aufweist, um die Durchflussrate des Kühlmittels in das Fluidkanalnetzwerk (102) einzustellen.

7. System nach Anspruch 4 oder 5, wobei der variable Durchflussratenregler einen thermischen Aktuator aufweist, der so konfiguriert ist, dass er die Durchflussrate automatisch in Abhängigkeit von der Temperatur des Kühlmittels einstellt.

8. Stecker (300) für eine Ladestation für Elektrofahrzeuge, der Folgendes aufweist:
ein System nach einem der Ansprüche 1 bis 7 und einen Kontaktanschluss (320), der den Fluidauslass (114) zum Anschließen von Ausflussrohren, den Fluideinlass (112) zum Anschließen eines Zuflussrohrs und Mittel zum Anschließen mindestens eines Kupferleiters auf einer ersten Seite und Mittel zum Anschließen des Kontaktstifts (330) auf einer zweiten Seite aufweist;
wobei der Kontaktanschluss so konfiguriert ist, dass er mindestens einen Teil des ersten einzelnen Fluidübertragungskanals (122) und mindestens einen Teil des zweiten einzelnen Fluidübertragungskanals (124) aufnimmt; und
wobei das Fluidkanalnetzwerk (102) um den Kontaktstift (330) herum angeordnet ist und das Fluid im Kanalnetzwerk (102) in direktem oder indirektem Kontakt mit dem Kontaktstift (330) steht.

9. Ladepistole (804) für eine Ladestation für Elektrofahrzeuge, der Folgendes aufweist:
einen erster Stecker (300) nach Anspruch 8 und einen zweiten Stecker (300) nach Anspruch 8, wobei der erste Stecker (300) ein "DC+"-Stecker zum Bereitstellen eines positiven Gleichstrompols ist und der zweite Stecker (300) ein "DC-"-Stecker zum Bereitstellen eines negativen Gleichstrompols ist; und
ein Ladekabel mit mindestens einem "DC+"-Leiter, der mit dem "DC+"-Stecker verbunden ist, mindestens einem "DC-"-Leiter, der mit dem "DC-"-Stecker (300) verbunden ist, mindestens einem ersten Ausflussrohr, mindestens einem zweiten Ausflussrohr und einem Zuflussrohr, wobei der mindestens eine "DC+"-Leiter so konfiguriert ist, dass er das mindestens eine erste Ausflussrohr aufnimmt, wobei das mindestens eine erste Ausflussrohr mit dem Auslass (114) des "DC+"-Kontaktanschlusses verbunden ist, wobei der mindestens eine "DC-"-Leiter so konfiguriert ist, dass er das mindestens eine zweite Ausflussrohr aufnimmt, und wobei das mindestens eine zweite Ausflussrohr mit dem Auslass (114) des "DC-"-Kontaktanschlusses verbunden ist.

10. Ladestation (802) mit einer Ladepistole (804) nach Anspruch 9.

11. Verfahren (500) zum Kühlen eines Kontaktstifts (330) eines Steckers (300) einer Ladepistole für ein Elektrofahrzeug, das Folgendes aufweist:
Bereitstellen (501) eines Kühlmittelflusses in einem Fluidkanalnetzwerk (102) einer Fluidkanalanordnung (100) des Steckers (300), wobei das Fluidkanalnetzwerk (102) um den Kontaktstift (330) herum angeordnet ist und in direktem oder indirektem Kontakt mit dem Kontaktstift (330) steht, wobei ein Fluideinlass (112) über einen ersten einzelnen Fluidübertragungskanal (122) mit dem Fluidkanalnetzwerk (102) verbunden ist, wobei der Fluideinlass (112) so konfiguriert ist, dass er das Kühlmittel über ein Ladekabel aufnimmt und das Kühlmittel in das Fluidkanalnetzwerk (102) einspritzt, und wobei ein Fluidauslass (114) über einen zweiten einzelnen Fluidübertragungskanal (124) mit dem Fluidkanalnetzwerk (102) verbunden ist, wobei der Fluidauslass (114) so konfiguriert ist, dass er das Kühlmittel aus dem Fluidkanalnetzwerk (102) aufnimmt und das Kühlmittel in das Ladekabel einspritzt; und
Einstellen (502) einer Durchflussrate des Kühlmittels aus einem ersten einzelnen Fluidübertragungskanal (122) in das Fluidkanalnetzwerk (102) durch Verwendung eines in den Kontaktstift (330) integrierten Bypasses (131), wobei der Bypass (131) so konfiguriert ist, dass er den ersten einzelnen Fluidübertragungskanal (122) und den zweiten einzelnen Fluidübertragungskanal (124) direkt verbindet, um eine Durchflussrate des Kühlmittels in das Fluidkanalnetzwerk (102) einzustellen.

12. Verfahren nach Anspruch 11, wobei der Stecker (300) ein Stecker (300) nach Anspruch 8 ist.

## Revendications

1. Système pour un organe de raccordement (300) d'un pistolet de recharge (804) pour un véhicule électrique (800), comprenant :
une cheville de contact (330) du pistolet de recharge (804) et un ensemble canal de fluide (100), comprenant :
- un réseau canal de fluide (102) destiné à refroidir la cheville de contact (330) du pistolet de recharge (804), dans lequel le réseau canal de fluide (102) est agencé autour de la cheville de contact (330) et est en contact direct ou indirect avec la cheville de contact (330) ;
- une entrée de fluide (112) raccordée au réseau canal de fluide (102) par l'intermédiaire d'un premier canal de transfert de fluide unique (122), l'entrée de fluide (112) étant configurée pour recevoir un fluide de refroidissement à travers un câble de recharge et pour injecter le fluide de refroidissement dans le réseau canal de fluide (102) ;
- une sortie de fluide (114) raccordée au réseau canal de fluide (102) par l'intermédiaire d'un second canal de transfert de fluide unique (124), la sortie de fluide (114) étant configurée pour recevoir le fluide de refroidissement en provenance du réseau canal de fluide (102) et pour injecter le fluide de refroidissement dans le câble de recharge ;
**caractérisé en ce que** :
une dérivation (131) est intégrée dans la cheville de contact (330), dans lequel la dérivation (131) est configurée pour raccorder directement le premier canal de transfert de fluide unique (122) et le second canal de transfert de fluide unique (124) pour régler un débit d'écoulement du fluide de refroidissement entrant dans le réseau canal de fluide (102), et dans lequel la cheville de contact (330) est échangeable.

2. Système selon la revendication 1, comprenant en outre un réducteur de débit remplaçable prévu dans le premier canal de transfert de fluide unique (122).

3. Système selon la revendication 1 ou 2, comprenant en outre un réducteur de débit ajustable, particulièrement une vis, s'étendant dans le premier canal de transfert de fluide unique (122).

4. Système selon de quelconques des revendications 1 à 3, comprenant en outre un dispositif d'équilibrage de débit actif variable configuré de telle sorte que le débit d'écoulement du fluide de refroidissement entrant dans le réseau canal de fluide (102) est réglable de manière variable.

5. Système selon la revendication 4, dans lequel le dispositif d'équilibrage de débit actif variable (130) est un ajusteur de débit d'écoulement variable prévu dans le premier canal de transfert de fluide unique (122).

6. Système selon la revendication 4 ou 5, dans lequel l'ajusteur de débit d'écoulement variable comprend un actionneur pneumatique, hydraulique, ou électrique, pour ajuster le débit d'écoulement du fluide de refroidissement dans le réseau canal de fluide (102).

7. Système selon la revendication 4 ou 5, dans lequel l'ajusteur de débit d'écoulement variable comprend un actionneur thermique configuré pour ajuster le débit d'écoulement automatiquement en fonction d'une température du fluide de refroidissement.

8. Organe de raccordement (300) pour une station de recharge de véhicule électrique, comprenant :
un système selon de quelconques des revendications 1 à 7 et une borne de contact (320) comprenant la sortie de fluide (114) destinée à raccorder des tubes d'écoulement sortant, l'entrée de fluide (112) étant destinée à raccorder un tube d'écoulement entrant, et des moyens destinés à raccorder au moins un conducteur en cuivre sur un premier côté et des moyens destinés à raccorder la cheville de contact (330) sur un second côté ;
dans lequel la borne de contact est configurée pour loger au moins une partie du premier canal de transfert de fluide unique (122) et au moins une partie du second canal de transfert de fluide unique (124) ; et
dans lequel le réseau canal de fluide (102) est agencé autour de la cheville de contact (330) et le fluide dans le réseau canal (102) est en contact direct ou indirect avec la cheville de contact (330).

9. Pistolet de recharge (804) pour une station de recharge de véhicule électrique, comprenant :
un premier organe de raccordement (300) selon la revendication 8 et un second organe de raccordement (300) selon la revendication 8, dans lequel le premier organe de raccordement (300) est un organe de raccordement CC+ destiné à fournir un pôle CC positif, et le second organe de raccordement (300) est un organe de raccordement CC-destiné à fournir un pôle CC négatif ; et
un câble de recharge avec au moins un conducteur CC+ raccordé à l'organe de raccordement CC+, au moins un conducteur CC- raccordé à l'organe de raccordement CC- (300), au moins un premier tube d'écoulement sortant, au moins un second tube d'écoulement sortant, et un tube d'écoulement entrant, dans lequel l'au moins un conducteur CC+ est configuré pour recevoir l'au moins un premier tube d'écoulement sortant, dans lequel l'au moins un premier tube d'écoulement sortant est raccordé à la sortie (114) de la borne de contact CC+, dans lequel l'au moins un conducteur CC- est configuré pour recevoir l'au moins un second tube d'écoulement sortant, et dans lequel l'au moins un second tube d'écoulement sortant est raccordé à la sortie (114) de la borne de contact CC-.

10. Station de recharge (802), comprenant un pistolet de recharge (804) selon la revendication 9.

11. Procédé (500) de refroidissement d'une cheville de contact (330) d'un organe de raccordement (300) d'un pistolet de recharge pour un véhicule électrique, comprenant
la fourniture (501) d'un écoulement de fluide de refroidissement dans un réseau canal de fluide (102) d'un ensemble canal de fluide (100) de l'organe de raccordement (300), le réseau canal de fluide (102) étant agencé autour de la cheville de contact (330) et est en contact direct ou indirect avec la cheville de contact (330), dans lequel une entrée de fluide (112) est raccordée au réseau canal de fluide (102) par l'intermédiaire d'un premier canal de transfert de fluide unique (122), l'entrée de fluide (112) étant configurée pour recevoir le fluide de refroidissement à travers un câble de recharge et pour injecter le fluide de refroidissement dans le réseau canal de fluide (102), et dans lequel une sortie de fluide (114) est raccordée au réseau canal de fluide (102) par l'intermédiaire d'un second canal de transfert de fluide unique (124), la sortie de fluide (114) étant configurée pour recevoir le fluide de refroidissement en provenance du réseau canal de fluide (102) et pour injecter le fluide de refroidissement dans le câble de recharge ; et
le réglage (502) d'un débit d'écoulement du fluide de refroidissement, provenant d'un premier canal de transfert de fluide unique (122), entrant dans le réseau canal de fluide (102) en employant une dérivation (131) intégrée dans la cheville de contact (330), dans lequel la dérivation (131) est configurée pour raccorder directement le premier canal de transfert de fluide unique (122) et le second canal de transfert de fluide unique (124) pour régler un débit d'écoulement du fluide de refroidissement entrant dans le réseau canal de fluide (102).

12. Procédé de la revendication 11, dans lequel l'organe de raccordement (300) est un organe de raccordement (300) selon la revendication 8.
